# EUROPEAN PATENT APPLICATION

(11) **EP 4 116 081 A1**
(43) Date of publication of application: **11.01.2023**
(21) Application number: 21765038.1
(22) Date of filing: 26.02.2021
(51) Int. Cl.: B32B 5/10, B32B 7/03, B32B 27/04, B32B 27/12, B32B 27/32, C08K 7/06, C08L 23/00

(54) **UNIDIRECTIONAL FIBER-REINFORCED THERMOPLASTIC RESIN SHEET AND METHOD FOR MANUFACTURING SAME**

(30) Priority: 02.03.2020 JP 2020034968
(71) Applicant: Mitsui Chemicals, Inc., Tokyo 105-7122 (JP)
(72) Inventor: ISSHIKI, Minoru, Sodegaura-shi, Chiba 299-0265 (JP); MIYATA, Atsushi, Sodegaura-shi, Chiba 299-0265 (JP); NAKAYAMA, Kentaro, Sodegaura-shi, Chiba 299-0265 (JP)
(74) Representative: Hoffmann Eitle
(86) International application number: PCT/JP2021/007317
(87) International publication number: WO 2021/177158

(57) **Abstract**

Disclosed herein are: a unidirectional fiber-reinforced thermoplastic resin sheet 1 that comprises a thermoplastic resin 12 and reinforcing fibers 11, the reinforcing fibers 11 being drawn in the lengthwise direction, the sheet 1 comprising a fiber-reinforced layer 10 comprising at least 40% by volume of the reinforcing fibers 11, and a resin layer 20 (or 20a and 20b) that is 0% or more and less than 5% by volume of the reinforcing fibers 11; a laminated panel and structural material comprising the unidirectional fiber-reinforced thermoplastic resin sheet 1; and a method for manufacturing the unidirectional fiber-reinforced thermoplastic resin sheet 1 in which the reinforcing fibers 11 are impregnated with the thermoplastic resin so that the tensile strength of the reinforcing fibers 11 is in the range of 800 cN to 2,000 cN.

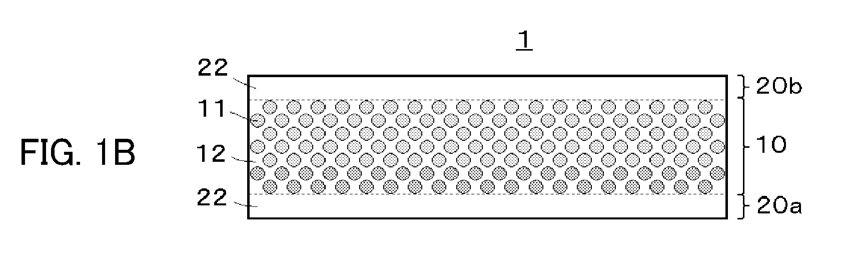

## Description

### Technical Field

The present invention relates to a unidirectional fiber-reinforced thermoplastic resin sheet, a stacked panel and a structure material each including the unidirectional fiber-reinforced thermoplastic resin sheet, and a method for producing the sheet.

### Background Art

Fiber-reinforced plastics have both strength and lightness, and thus attract attention as alternative materials to members made of metals such as iron and aluminum. One known mode thereof is a unidirectional fiber-reinforced thermoplastic resin sheet in which fibers are unidirectionally aligned.

Fiber-reinforced plastics exhibit superior performances such as tensile strength and elastic modulus than metals, whereas they often exhibit lower values of impact strength than metals. There is then a demand for improvement in impact strength of fiber-reinforced plastics.

PTL 1 discloses, as a solution for improving impact strength of a unidirectional fiber-reinforced thermoplastic resin sheet, a fiber-reinforced composite material having a structure in which a layer including a carbon fiber, a cured product of a thermosetting resin, and a core-shell polymer particle, and a layer including a cured product of a thermosetting resin, a core-shell polymer particle, and an amorphous thermoplastic resin are alternately stacked. PTL 1 provides the description where such a fiber-reinforced composite material is strong against impact from the outside and furthermore is excellent in fatigue characteristics, for example, change in usage environment, specifically, change in temperature and repeated load.

PTL 2 discloses a unidirectional material including a reinforcement fiber bundle treated with an emulsion including a specified modified polyolefin and a specified amine compound, the unidirectional material exhibiting a sufficient strengthening effect even in a smaller amount of fiber.

### Citation List

### Patent Literature

PTL 1
   Japanese Patent Application Laid-Open No. 2010-189561
PTL 2
   WO2016/114352

### Summary of Invention

### Technical Problem

The present inventors have made studies, and thus have found that the fiber-reinforced composite material described in PTL 1 has a structure which allows for not an improvement in impact strength of a cured product by itself of a thermosetting resin, the cured product being to be disrupted by brittle failure, but absorption of impact energy by the core-shell polymer particle or the amorphous thermoplastic resin and the amount of these components added has the upper limit to thereby restrict impact absorption performance, and there is a need for further improvement.

The present inventors have made studies, and thus have found that the unidirectional fiber-reinforced thermoplastic resin sheet described in PTL 2 is not sufficient in impact absorption performance in some cases and there is room for further improvement in impact absorption performance.

An object of the present invention is to provide a unidirectional fiber-reinforced thermoplastic resin sheet enhanced in impact strength and a method for producing the same.

### Solution to Problem

The present inventors have found that a unidirectional fiber-reinforced thermoplastic resin sheet including a thermoplastic resin and a reinforcement fiber, the reinforcement fiber being aligned in a longitudinal direction, includes a fiber-reinforced layer having a fiber volume fraction of the reinforcement fiber, of 40% or more, and a resin layer having a fiber volume fraction of the reinforcement fiber, of 0% or more and less than 5% and therefore is enhanced in impact strength, and thus have completed the present invention. The present invention is specified by the following items.
[1] A unidirectional fiber-reinforced thermoplastic resin sheet including a thermoplastic resin and a reinforcement fiber, the reinforcement fiber being aligned in a longitudinal direction, the unidirectional fiber-reinforced thermoplastic resin sheet including:
   a fiber-reinforced layer having a fiber volume fraction of the reinforcement fiber, of 40% or more; and
   a resin layer having a fiber volume fraction of the reinforcement fiber, of 0% or more and less than 5%.
[2] The unidirectional fiber-reinforced thermoplastic resin sheet according to [1], in which the resin layer forms at least one surface of opposite two surfaces in a thickness direction of the unidirectional fiber-reinforced thermoplastic resin sheet.
[3] The unidirectional fiber-reinforced thermoplastic resin sheet according to [1], in which a ratio (t2/t1) of a thickness (t2) of the resin layer to a thickness (t1) of the fiber-reinforced layer is 0.05 or more and 0.5 or less.
[4] The unidirectional fiber-reinforced thermoplastic resin sheet according to [1], in which the resin layer has a thickness of 10 µm or more.
[5] The unidirectional fiber-reinforced thermoplastic resin sheet according to [1], in which the fiber-reinforced layer has a thickness of 60 µm or more and 300 µm or less.
[6] The unidirectional fiber-reinforced thermoplastic resin sheet according to [1], in which the reinforcement fiber comprises a carbon fiber.
[7] The unidirectional fiber-reinforced thermoplastic resin sheet according to [1], in which the thermoplastic resin in the fiber-reinforced layer comprises a polyolefin-based resin.
[8] The unidirectional fiber-reinforced thermoplastic resin sheet according to [1], in which the thermoplastic resin in the resin layer comprises a polyolefin-based resin.
[9] The unidirectional fiber-reinforced thermoplastic resin sheet according to [1], in which a fiber volume fraction of the entire unidirectional fiber-reinforced thermoplastic resin sheet is 40% or more and 60% or less.
[10] The unidirectional fiber-reinforced thermoplastic resin sheet according to [1], in which the thermoplastic resin in the fiber-reinforced layer and the thermoplastic resin in the resin layer are compatible with each other.
[11] The unidirectional fiber-reinforced thermoplastic resin sheet according to [1], in which the thermoplastic resin in the fiber-reinforced layer and the thermoplastic resin in the resin layer are the same as each other.
[12] The unidirectional fiber-reinforced thermoplastic resin sheet according to [1], in which the fiber-reinforced layer and the resin layer are integrally formed.
[13] A stacked panel including a plurality of the unidirectional fiber-reinforced thermoplastic resin sheets according to [1].
[14] A structure material including the unidirectional fiber-reinforced thermoplastic resin sheet according to [1].
[15] A method for producing the unidirectional fiber-reinforced thermoplastic resin sheet according to [1], the method including impregnating a reinforcement fiber with a thermoplastic resin on an impregnation roller including a molten thermoplastic resin, in which
   impregnation with the thermoplastic resin is performed at a tensile force of the reinforcement fiber in a range from 800 cN to 2,000 cN.
[16] The method for producing the unidirectional fiber-cured thermoplastic resin sheet according to [15], wherein the thermoplastic resin includes a propylene-based resin having a melt flow rate (MFR) of 10 to 1,000 g/10 minutes, as measured at 230°C and a load of 2.16 kg according to ASTM D1238.

### Advantageous Effects of Invention

According to the present invention, a unidirectional fiber-reinforced thermoplastic resin sheet enhanced in impact strength and a method for producing the same can be provided.

The reason for an enhancement in impact strength of the unidirectional fiber-reinforced thermoplastic resin sheet of the present invention is presumed by the present inventors as follows.

When impact is applied to a conventional unidirectional fiber-reinforced thermoplastic resin sheet including a thermoplastic resin, fracture may occur at an interface between the thermoplastic resin and a reinforcement fiber. It is considered that the fracture propagates toward a surrounding interface between the thermoplastic resin and a reinforcement fiber to result in the occurrence of cracking internally and accession of the cracking to both surfaces through such each interface, causing breaking of the entire unidirectional fiber-reinforced thermoplastic resin sheet. On the contrary, the unidirectional fiber-reinforced thermoplastic resin sheet of the present invention is sufficiently low in density of the reinforcement fiber in the resin layer. Thus, it is considered that, even if cracking occurs in the fiber-reinforced layer, the cracking is blocked by such a resin layer where an interface mediating elongation of the cracking is less present, and breaking of the entire unidirectional fiber-reinforced thermoplastic resin sheet is hardly caused. It is considered that, as a result, the unidirectional fiber-reinforced thermoplastic resin sheet of the present invention is excellent in impact strength.

In the case of a conventional unidirectional fiber-reinforced thermosetting resin sheet including a thermosetting resin, the thermosetting resin is disrupted by brittle failure, and thus it is presumed that impact absorption characteristics are not sufficient due to not only the presence of propagation of the cracking, but also a disruption mode with brittle failure.

### Brief Description of Drawings

FIGS. 1A and 1B each illustrate a schematic cross-sectional view illustrating an embodiment of a structure of the unidirectional fiber-reinforced thermoplastic resin sheet of the present invention; and
FIG. 2 illustrates one example of an apparatus for producing the unidirectional fiber-reinforced thermoplastic resin sheet of the present invention.

### Description of Embodiments

A numerical value range indicated by using "to" in the present invention means a range including respective numerical values described before and after "to" as the minimum value and the maximum value. The upper limit value or the lower limit value described in a certain numerical value range, among numerical value ranges herein described in a stepwise manner, may be replaced with the upper limit value or the lower limit value described in other stepwise numerical value range. The upper limit value or the lower limit value described in a certain numerical value range, among numerical value ranges described herein, may be replaced with any value shown in Examples.

In the present invention, when a plurality of substances corresponding to each component are present in a composition, the amount of such each component in the composition means the total amount of the substances present in the composition, unless particularly noted. A combination of two or more preferable aspects in the present invention is a more preferable aspect.

In the present invention, the terms "propylene-based polymer" and "propylene-based resin" are each a term referring to a polymer or a resin including 50mass% or more of propylene as a constituent unit.

Hereinafter, embodiments of the unidirectional fiber-reinforced thermoplastic resin sheet of the present invention will be described appropriately with reference to the accompanying drawings.

### <Fiber-reinforced layer>

The unidirectional fiber-reinforced thermoplastic resin sheet of the present invention includes a fiber-reinforced layer having a fiber volume fraction of a reinforcement fiber, of 40% or more. The fiber-reinforced layer specifically includes a thermoplastic resin and a reinforcement fiber, and the reinforcement fiber is aligned in a longitudinal direction. The reinforcement fiber mainly functions as a reinforcement material, and the thermoplastic resin mainly functions as a matrix resin.

The fiber volume fraction of the reinforcement fiber in the fiber-reinforced layer is 40% or more, preferably 50% or more and 80% or less. A fiber volume fraction of 40% or more tends to allow the function as a reinforcement material, of the reinforcement fiber, to be sufficiently exhibited. A fiber volume fraction of 80% or less tends to allow for a more enhancement in impact strength.

The content of the thermoplastic resin in the fiber-reinforced layer is preferably 10mass% to 55mass%, more preferably 10mass% to 45mass% from the viewpoint of more enhancements in bending strength and impact resistance.

### (Reinforcement fiber in fiber-reinforced layer)

The type of the reinforcement fiber in the fiber-reinforced layer is not particularly limited, and at least one kind of known various fibers can be adopted. In particular, a PAN-based, pitch-based or rayon-based carbon fiber is preferable from the viewpoints of an enhancement in mechanical characteristics and the effect of reduction in weight of a molded article. A PAN-based carbon fiber is more preferable from the viewpoint of the balance between strength and elastic modulus of a molded article to be obtained.

The length of the reinforcement fiber in the fiber-reinforced layer is not particularly limited, and may be any length at which the reinforcement fiber in the state of aligned in a longitudinal direction can be disposed in a unidirectional fiber-reinforced thermoplastic resin sheet and which corresponds to the size necessary for an application of the unidirectional fiber-reinforced thermoplastic resin sheet. The aspect ratio of the reinforcement fiber is usually more than 500.

The average diameter of the reinforcement fiber in the fiber-reinforced layer is not particularly limited, and is preferably 1 to 20 µm, more preferably 3 to 15 µm from the viewpoints of mechanical characteristics and surface appearance of a molded article to be obtained.

The reinforcement fiber in the fiber-reinforced layer is preferably obtained by opening a fiber bundle formed using a sizing agent. The number of single yarns in the fiber bundle is not particularly limited, and is usually 100 to 350,000, preferably 1,000 to 250,000, more preferably 5,000 to 220,000. The sizing agent forming the fiber bundle is, for example, an olefin-based emulsion, a urethane-based emulsion, an epoxy-based emulsion, or a nylon-based emulsion, preferably an olefin-based emulsion, more preferably a propylene-based emulsion. When adhesiveness between a reinforcement fiber bundle and a matrix resin is enhanced, the type of a resin of such an emulsion for use in the reinforcement fiber bundle and the type of a resin of such a matrix are preferably the same. For example, when the matrix resin is nylon, a nylon-based emulsion is preferably used as the sizing agent, and when the matrix resin is polypropylene, an olefin-based emulsion is preferably used as the sizing agent. In particular, when the matrix resin is polypropylene-based, a propylene-based emulsion including an unmodified propylene-based resin and a modified propylene-based resin is preferable as the sizing agent. The unmodified propylene-based resin and the modified propylene-based resin for use in the sizing agent can be respectively suitably the same as unmodified propylene-based resin (P1) and modified propylene-based resin (P2) for use in a thermoplastic resin described below.

### (Thermoplastic resin in fiber-reinforced layer)

The type of the thermoplastic resin in the fiber-reinforced layer is not particularly limited, and at least one kind of known various thermoplastic resins can be adopted.

Specific examples of the thermoplastic resin in the fiber-reinforced layer include a polycarbonate resin, a styrene-based resin, a polyamide-based resin, a polyester resin, a polyphenylene sulfide resin (PPS resin), a modified polyphenylene ether resin (modified PPE resin), a polyacetal resin (POM resin), liquid crystal polyester, polyarylate, an acrylic resin such as a polymethyl methacrylate resin (PMMA), vinyl chloride, polyimide (PI), polyamideimide (PAI), polyetherimide (PEI), polysulfone, polyethersulfone, polyketone, polyetherketone, polyetheretherketone (PEEK), polyolefins such as polyethylene and polypropylene, modified polyolefin, a phenol resin, and a phenoxy resin. These may be used in combinations of two or more kinds thereof. In particular, a resin having polarity is preferably a polyamide-based resin or a polyester resin, and a resin low in polarity is preferably a polyolefin-based resin. The thermoplastic resin preferably includes a propylene-based resin and/or a polyamide-based resin, more preferably includes a propylene-based resin particularly from the viewpoints of cost and a reduction in weight of a molded article. In particular, a propylene-based resin having a melt flow rate (MFR) of 10 to 1,000 g/10 minutes, as measured at 230°C and a load of 2.16 kg according to ASTM D1238, is preferable, and a propylene-based resin having a MFR of 15 to 500 g/10 minutes is more preferable, from the viewpoint of a more enhancement in impact characteristics. The MFR is properly higher (for example, 10 g/10 minutes, or more) to result in tendencies to easily uniformly impregnate the fiber with the resin, to suppress the occurrence of an impregnation failure portion, and to stabilize characteristics such as impact resistance. The MFR is properly lower (for example, 1000 g/10 minutes, or less) to result in tendencies to enhance strength of the resin by itself and to enhance characteristics such as impact resistance.

The type of the propylene-based resin is not particularly limited, and may be any of a propylene homopolymer and a propylene-based copolymer or may be a combination thereof. The stereoregularity may be isotactic, syndiotactic, or atactic, and in particular, is preferably isotactic or syndiotactic.

The thermoplastic resin in the fiber-reinforced layer may be either unmodified propylene-based resin (P1) or modified propylene-based resin (P2) including at least a carboxylic acid salt bound to a polymer chain, or may be a combination thereof. In particular, both unmodified propylene-based resin (P1) and modified propylene-based resin (P2) are preferably included. In this case, the mass ratio [(P1)/(P2)] between both the resins is preferably 99/1 to 80/20, more preferably 98/2 to 85/15, particularly preferably 97/3 to 90/10.

The melt flow rate (MFR) of unmodified propylene-based resin (PI), as measured at 230°C and a load of 2.16 kg according to ASTM D1238, is preferably 100 g/10 minutes, or more, more preferably 130 to 500 g/10 minutes. When the MFR falls within the range, the reinforcement fiber bundle tends to be sufficiently impregnated with the thermoplastic resin.

The weight average molecular weight (Mw) of unmodified propylene-based resin (P1) is preferably 50,000 to 300,000, more preferably 50,000 to 200,000.

Unmodified propylene-based resin (P1) is a resin having a propylene-derived structural unit, and the amount of the propylene-derived structural unit is preferably 50mol% or more. A copolymer may also be adopted which includes not only the propylene-derived structural unit, but also at least one olefin (excluding propylene) selected from the group consisting of an α-olefin, a conjugated diene and a non-conjugated diene, or a polyene-derived structural unit.

When unmodified propylene-based resin (P1) is such a copolymer, specific examples of the α-olefin as a copolymerization component include C2-20 α-olefins except for propylene, such as ethylene, 1-butene, 3-methyl-1-butene, 4-methyl-1-pentene, 3-methyl-1-pentene, 4-methyl-1-hexene, 4,4-dimethyl-1-hexene, 1-nonene, 1-octene, 1-heptene, 1-hexene, 1-decene, 1-undecene, 1-dodecene, 1-tetradecene, 1-hexadecene, 1-octadecene and 1-eicosene. In particular, 1-butene, ethylene, 4-methyl-1-pentene and 1-hexene are preferable, and 1-butene and 4-methyl-1-pentene are more preferable.

Specific examples of the conjugated diene and the non-conjugated diene as copolymerization components include butadiene, ethylidenenorbornene, dicyclopentadiene and 1,5-hexadiene.

Two or more of the above α-olefin, conjugated diene and non-conjugated diene may be used in combination.

Modified propylene-based resin (P2) is a propylene-based resin including at least a carboxylic acid salt bound to a polymer chain. The carboxylic acid salt of modified propylene-based resin (P2) exerts the effect of enhancing interface adhesion strength between the reinforcement fiber and the thermoplastic resin.

Examples of a propylene-based polymer as a raw material of modified propylene-based resin (P2) include a propylene homopolymer; and a copolymer of propylene and an α-olefin singly or two or more thereof, typical examples being an ethylene-propylene copolymer, a propylene-1-butene copolymer or an ethylene-propylene-1-butene copolymer. Examples of a monomer having a carboxylic acid structure, as a raw material, include a monomer having a carboxylic acid group neutralized or not neutralized and a monomer having a carboxylic acid ester saponified or not saponified. A method of radical graft polymerization of the propylene-based polymer and the monomer having a carboxylic acid structure is a representative method for producing modified propylene-based resin (P2). Specific examples of the olefin for use in the propylene-based polymer are the same as those of the olefin for use in unmodified propylene-based resin (P1).

Modified propylene-based resin (P2) can be obtained by direct polymerization of propylene and the monomer having a carboxylic acid ester with a special catalyst, or obtained by high-pressure radical polymerization of ethylene, propylene, and the monomer having a carboxylic acid structure in the case of a polymer including a large amount of ethylene.

Examples of the monomer having a carboxylic acid group neutralized or not neutralized and the monomer having a carboxylic acid ester saponified or not saponified include ethylene-based unsaturated carboxylic acid, and an anhydride and an ester thereof; and a compound having an unsaturated vinyl group other than olefin.

Specific examples of the ethylene-based unsaturated carboxylic acid include (meth)acrylic acid, maleic acid, fumaric acid, tetrahydrophthalic acid, itaconic acid, citraconic acid, crotonic acid, and isocrotonic acid. Specific examples of the acid anhydride include Nadic acid (trademark) (endocis-bicyclo[2.2.1]hept-5-ene-2,3-dicarboxylic acid), maleic anhydride, and citraconic anhydride.

Specific examples of the compound having an unsaturated vinyl group other than olefin include (meth)acrylic acid esters such as methyl (meth)acrylate, ethyl (meth)acrylate, propyl (meth)acrylate, n-butyl (meth)acrylate, i-butyl (meth)acrylate, tert-butyl (meth)acrylate, n-amyl (meth)acrylate, isoamyl (meth)acrylate, n-hexyl (meth)acrylate, 2-ethylhexyl (meth)acrylate, octyl (meth)acrylate, decyl (meth)acrylate, dodecyl (meth)acrylate, octadecyl (meth)acrylate, stearyl (meth)acrylate, tridecyl (meth)acrylate, lauroyl (meth)acrylate, cyclohexyl (meth)acrylate, benzyl (meth)acrylate, phenyl (meth)acrylate, isobornyl (meth)acrylate, dicyclopentanyl (meth)acrylate, dicyclopentenyl (meth)acrylate, dimethylaminoethyl (meth)acrylate and diethylaminoethyl (meth)acrylate; hydroxy group-containing vinyls such as hydroxyethyl acrylate, 2-hydroxyethyl (meth)acrylate, 2-hydroxypropyl (meth)acrylate, 4-hydroxybutyl acrylate, lactone-modified hydroxyethyl (meth)acrylate and 2-hydroxy-3-phenoxypropyl acrylate; epoxy group-containing vinyls such as glycidyl (meth)acrylate and methylglycidyl (meth)acrylate; isocyanate group-containing vinyls such as vinyl isocyanate and isopropenyl isocyanate; aromatic vinyls such as styrene, α-methylstyrene, vinyltoluene and t-butylstyrene; amides such as acrylamide, methacrylamide, N-methylol methacrylamide, N-methylol acrylamide, diacetone acrylamide and maleic acid amide; vinyl esters such as vinyl acetate and vinyl propionate; aminoalkyl (meth)acrylates such as N,N-dimethylaminoethyl (meth)acrylate, N,N-diethylaminoethyl (meth)acrylate, N,N-dimethylaminopropyl (meth)acrylate, N,N-dipropylaminoethyl (meth)acrylate, N,N-dibutylaminoethyl (meth)acrylate and N,N-dihydroxyethylaminoethyl (meth)acrylate; unsaturated sulfonic acids such as styrenesulfonic acid, styrenesulfonic acid soda and 2-acrylamide-2-methylpropanesulfonic acid; and unsaturated phosphates such as mono(2-methacryloyloxyethyl)acid phosphate and mono(2-acryloyloxyethyl)acid phosphate.

The above monomer having a carboxylic acid structure may be used in combinations of two or more kinds thereof. The monomer having a carboxylic acid structure is, in particular, preferably an acid anhydride, more preferably maleic anhydride.

Modified propylene-based resin (P2) can be produced by a known method such as a method disclosed in WO2017/183672.

The degree of neutralization or the degree of saponification, namely, the conversion of a metal salt, an ammonium salt or the like of a carboxylic acid group in a raw material of modified propylene-based resin (P2), into a carboxylic acid salt, is usually 50 to 100%, preferably 70 to 100%, more preferably 85 to 100% from the viewpoints of stability of a water dispersion and adhesiveness with the fiber. The carboxylic acid group in modified propylene-based resin (P2) is preferably fully neutralized or saponified by a base substance, and the carboxylic acid group may remain without being partially neutralized or saponified.

The method for analyzing a salt component of the carboxylic acid group is, for example, a method for detecting the type of a metal forming such a salt with ICP emission analysis, or a method for identifying the structure of such a salt of the acid group with IR, NMR, mass analysis or element analysis.

The weight average molecular weight (Mw) of modified propylene-based resin (P2) is preferably 1,000 to 100,000, more preferably 2,000 to 80,000.

When the thermoplastic resin comprises a polyamide-based resin, adhesiveness in particular to metal tends to be enhanced. The type of the polyamide-based resin is not particularly limited, and any of known various polyamide-based resins can be used. Specific examples include polyamide 6, polyamide 12, polyamide 66, polyamide 11, and aromatic polyamide. In particular, polyamide 6 and polyamide 12 are preferable.

The melt flow rate (MFR) of the polyamide-based resin, as measured at 230°C and a load of 2.16 kg according to ASTM D1238 after drying at 80°C for 5 hours, is preferably 40 g/10 minutes, or more, more preferably 40 to 400 g/10 minutes. When the MFR falls within the range, the reinforcement fiber tends to be sufficiently impregnated with the thermoplastic resin. The weight average molecular weight (Mw) of the polyamide-based resin is preferably 5,000 to 50,000, more preferably 5,000 to 30,000.

The thermoplastic resin may contain an additive as long as the objects and effects of the present invention are not impaired. Specific examples of the additive include a flame retardant, a conductivity-imparting agent, a nucleating agent, an ultraviolet absorbent, an infrared absorbent, an antioxidant, an antimicrobial agent, an insect repellent, a deodorant, a coloring inhibitor, a heat stabilizer, a release agent, an antistatic agent, a plasticizer, a lubricant, a colorant, a pigment, a dye, and a defoamer.

### <Resin layer>

The unidirectional fiber-reinforced thermoplastic resin sheet of the present invention includes a resin layer having a fiber volume fraction of the reinforcement fiber, of 0% or more and less than 5%. The resin layer specifically includes a thermoplastic resin and preferably includes no reinforcement fiber. It is noted that a small amount (a fiber volume fraction of less than 5%) of the reinforcement fiber may be included. The unidirectional fiber-reinforced thermoplastic resin sheet of the present invention includes the resin layer and thus is excellent in impact strength as compared with a conventional unidirectional fiber-reinforced thermoplastic resin sheet including no resin layer. The reasons for this, as described above, are because an interface (interface between the thermoplastic resin and the reinforcement fiber) mediating elongation of cracking is less present in the resin layer and the resin layer is more excellent in impact absorption characteristics than the fiber-reinforced layer.

The fiber volume fraction of the reinforcement fiber in the resin layer is 0% or more and less than 5%, preferably 0% or more and less than 3%.

The content of the thermoplastic resin in the resin layer is preferably more than 90mass% and 100mass% or less, more preferably more than 94mass% and 100mass% or less from the viewpoint of a more enhancement in impact absorption characteristics.

### (Thermoplastic resin in resin layer)

The type of the thermoplastic resin in the resin layer is not particularly limited, and at least one kind of known various thermoplastic resins can be used. A preferable mode of the thermoplastic resin in the resin layer is the same as the preferable mode of the thermoplastic resin in the fiber-reinforced layer, exemplified above. In other words, at least one of various thermoplastic resins listed as the thermoplastic resin in the fiber-reinforced layer can be suitably used as the thermoplastic resin in the resin layer. For example, the thermoplastic resin in the fiber-reinforced layer preferably includes a polyolefin-based resin, and similarly the thermoplastic resin in the resin layer also preferably includes a polyolefin-based resin.

The thermoplastic resin in the resin layer and the thermoplastic resin in the fiber-reinforced layer may be the same as or different from each other. It is noted that both the resins are preferably compatible with each other. The "compatible" means that, when both the resins are heated to the melting points or more and mixed, and cooled to 25°C, a single phase is formed. Furthermore, both the resins are more preferably the same. Both the resins are preferably compatible with and furthermore the same as each other because unintended peeling tends to be thus more hardly caused between the fiber-reinforced layer and the resin layer. The thermoplastic resin in the resin layer and the thermoplastic resin in the fiber-reinforced layer being the same herein means that the resins are the same within measurement errors in terms of monomer composition, the weight average molecular weight (Mw) on polystyrene conversion and the molecular weight distribution (Mw/Mn).

### (Reinforcement fiber in resin layer)

When the fiber-reinforced layer includes a reinforcement fiber, the type of the reinforcement fiber is not particularly limited, and at least one kind of known various reinforcement fibers can be used. A preferable model of the reinforcement fiber in the resin layer is the same as the preferable mode of the reinforcement fiber in the fiber-reinforced layer, exemplified above.

### <Unidirectional fiber-reinforced thermoplastic resin sheet>

The unidirectional fiber-reinforced thermoplastic resin sheet of the present invention is a unidirectional fiber-reinforced thermoplastic resin sheet including a thermoplastic resin and a reinforcement fiber, the reinforcement fiber being aligned in a longitudinal direction, in which the resin sheet including the above-described fiber-reinforced layer and resin layer. The resin layer preferably forms at least one surface of two surfaces positioned to be opposite to each other in a thickness direction of the unidirectional fiber-reinforced thermoplastic resin sheet. The resin layer and the fiber-reinforced layer are preferably contacted. The fiber-reinforced layer and the resin layer are preferably integrally formed in the unidirectional fiber-reinforced thermoplastic resin sheet from the viewpoint of a more enhancement in impact characteristics. The "integrally formed" means that the boundary between the fiber-reinforced layer and the resin layer can be confirmed only with the difference in amount of the reinforcement fiber.

The thickness of the fiber-reinforced layer in the unidirectional fiber-reinforced thermoplastic resin sheet is not particularly limited, and is preferably 60 µm or more and 300 µm or less, more preferably 60 µm or more and 250 µm or less.

The thickness of the resin layer in the unidirectional fiber-reinforced thermoplastic resin sheet is not particularly limited, and is preferably 10 µm or more, more preferably 10 µm or more and 80 µm or less, particularly preferably 20 µm or more and 60 µm or less.

The ratio (t2/t1) of the thickness (t2) of the resin layer to the thickness (t1) of the fiber-reinforced layer in the unidirectional fiber-reinforced thermoplastic resin sheet is not particularly limited, and is preferably 0.05 or more and 0.5 or less, more preferably 0.1 or more and 0.4 or less.

The content of the thermoplastic resin in the unidirectional fiber-reinforced thermoplastic resin sheet is preferably 10mass% to 60mass%, more preferably 15mass% to 50mass%.

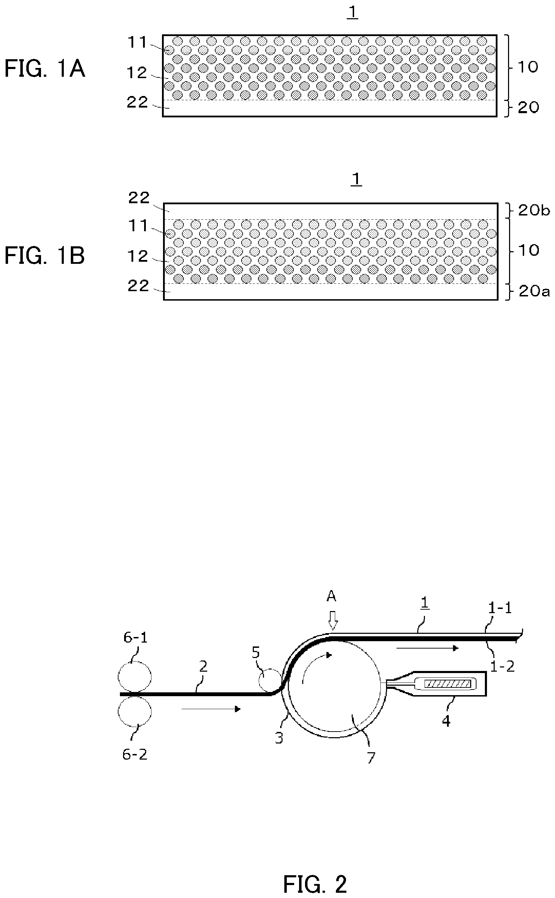

FIGS. 1A and 1B each illustrate a schematic cross-sectional view illustrating an embodiment of the structure of the unidirectional fiber-reinforced thermoplastic resin sheet of the present invention. FIGS. 1A and 1B each illustrate a schematic cross-sectional view of a surface perpendicular to a longitudinal direction of unidirectional fiber-reinforced thermoplastic resin sheet 1, and reinforcement fiber 11 is aligned in the longitudinal direction.

Unidirectional fiber-reinforced thermoplastic resin sheet 1 illustrated in each of FIGS. 1A and 1B includes fiber-reinforced layer 10 having a fiber volume fraction of reinforcement fiber 11, of 40% or more, and resin layer 20 (or resin layers 20a and 20b) having a fiber volume fraction of reinforcement fiber 11, of 0% or more and less than 5% (0% in FIGS. 1A and 1B). In other words, fiber-reinforced layer 10 includes reinforcement fiber 11 and thermoplastic resin 12 (matrix resin), and resin layer 20 (or resin layers 20a and 20b) includes thermoplastic resin 22.

Unidirectional fiber-reinforced thermoplastic resin sheet 1 illustrated in FIG. 1A includes one resin layer 20. Resin layer 20 forms one surface of opposite two surfaces in a thickness direction of unidirectional fiber-reinforced thermoplastic resin sheet 1, and fiber-reinforced layer 10 forms other surface thereof. More specifically, unidirectional fiber-reinforced thermoplastic resin sheet 1 illustrated in FIG. 1A is configured from resin layer 20 including such one surface and fiber-reinforced layer 10 including such other surface.

The boundary line (dotted line in the drawing) between resin layer 20 and fiber-reinforced layer 10 in unidirectional fiber-reinforced thermoplastic resin sheet 1 illustrated in FIG. 1A is defined by the difference in fiber volume fraction of reinforcement fiber 11. Thermoplastic resin 22 in resin layer 20 and thermoplastic resin 12 (matrix resin) in fiber-reinforced layer 10 may be the same as or different from each other. It is noted that both the resins are preferably compatible with each other and more preferably the same as each other.

Unidirectional fiber-reinforced thermoplastic resin sheet 1 illustrated in FIG. 1B includes two resin layers 20a and 20b. Resin layer 20a forms one surface of opposite two surfaces in a thickness direction of unidirectional fiber-reinforced thermoplastic resin sheet 1, and resin layer 20b forms other surface thereof. More specifically, unidirectional fiber-reinforced thermoplastic resin sheet 1 illustrated in FIG. 1B is configured from resin layer 20a including such one surface, resin layer 20b including such other surface, and fiber-reinforced layer 10 interposed between such two resin layers 20a and 20b.

The boundary line (lower dotted line in the drawing) between resin layer 20a and fiber-reinforced layer 10 and the boundary line (upper dotted line in the drawing) between resin layer 20b and fiber-reinforced layer 10 in unidirectional fiber-reinforced thermoplastic resin sheet 1 illustrated in FIG. 1B are each defined by the difference in fiber volume fraction of reinforcement fiber 11. Three resins of thermoplastic resin 22 in resin layer 20a, thermoplastic resin 22 in resin layer 20b, and thermoplastic resin 12 (matrix resin) in fiber-reinforced layer 10 may be the same as or different from one another. Specifically, all the three resins may be the same as one another or all the three resins are different from one another, thermoplastic resin 22 in resin layer 20a and thermoplastic resin 22 in resin layer 20b may be the same as each other and thermoplastic resin 12 (matrix resin) in fiber-reinforced layer 10 may be different therefrom, or thermoplastic resin 22 in resin layer 20a and thermoplastic resin 12 (matrix resin) in fiber-reinforced layer 10 may be the same as each other and thermoplastic resin 22 in resin layer 20b may be different therefrom. It is noted that thermoplastic resin 22 in resin layer 20a and thermoplastic resin 12 (matrix resin) in fiber-reinforced layer 10, and/or, thermoplastic resin 22 in resin layer 20b and thermoplastic resin 12 (matrix resin) in fiber-reinforced layer 10 are preferably compatible with each other. Furthermore, thermoplastic resin 22 in resin layer 20a and thermoplastic resin 12 (matrix resin) in fiber-reinforced layer 10, and/or, thermoplastic resin 22 in resin layer 20b and thermoplastic resin 12 (matrix resin) in fiber-reinforced layer 10 are more preferably the same as each other.

### <Method for producing unidirectional fiber-reinforced thermoplastic resin sheet>

The method for producing the unidirectional fiber-reinforced thermoplastic resin sheet of the present invention is not particularly limited. Examples of the production method include the following methods (1) and (2).
(1) A method for obtaining the unidirectional fiber-reinforced thermoplastic resin sheet of the present invention by adjusting conditions so that a resin layer having a fiber volume fraction of the reinforcement fiber, of 0% or more and less than 5%, is formed in contact/impregnation of a fiber bundle (reinforcement fiber) unidirectionally aligned, with matrix resin (M) molten (hereinafter, referred to as "production method with impregnation").
(2) A method for obtaining the unidirectional fiber-reinforced thermoplastic resin sheet of the present invention by stacking a resin layer on at least one surface of the unidirectional fiber-reinforced thermoplastic resin sheet for constituting the fiber-reinforced layer (hereinafter, referred to as "production method with stacking").

The production method with impregnation, of the above production methods, is preferable in particular from the viewpoints of the number of steps, production efficiency, and the like. Herein, the thermoplastic resin in the resin layer and the thermoplastic resin (matrix resin) in the fiber-reinforced layer are the same as each other in the production method with impregnation.

The production method with impregnation is, in particular, preferably a method for impregnating a reinforcement fiber with a thermoplastic resin on an impregnation roller including a molten thermoplastic resin, in which impregnation with the thermoplastic resin is performed at a tensile force of the reinforcement fiber in a range from 800 cN to 2,000 cN. Such a production method can relatively easily provide the unidirectional fiber-reinforced thermoplastic resin sheet of the present invention.

Hereinafter, the production method with impregnation will be described with reference to the accompanying drawings.

FIG. 2 illustrates one example of a production apparatus according to an impregnation method. FIG. 2 schematically illustrates a configuration of a main section of one example of the production apparatus, as a cross sectional view in a direction perpendicular to an axial direction of an impregnation roller.

The production apparatus illustrated in FIG. 2 has impregnation roller 7, conveyance rollers 6-1 and 6-2 that convey reinforcement fiber bundle 2, guide roller 5 that guides a feeding direction of reinforcement fiber bundle 2 toward a surface of impregnation roller 7, and material feeding apparatus 4 that feeds resin 3 to a periphery of impregnation roller 7. As in FIG. 2, impregnation roller 7 has a surface for unidirectional fiber-reinforced thermoplastic resin sheet formation, on the periphery thereof. A temperature control apparatus (not illustrated) that controls the surface temperature on the surface of impregnation roller 7, such as a heater for heating, can be provided in impregnation roller 7 or in the vicinity of impregnation roller 7. The production apparatus may be further provided with a cooling apparatus that decreases the temperature of unidirectional fiber-reinforced thermoplastic resin sheet 1 formed in the state of being heated, to fix the structure of unidirectional fiber-reinforced thermoplastic resin sheet 1.

Reinforcement fiber bundle 2 is formed by unidirectionally aligning a reinforcement fiber, and is fed into the apparatus. Reinforcement fiber bundle 2 is conveyed in an arrow direction in the production apparatus with not only keeping the thickness and width thereof, but also having a predetermined tension, by operation of a conveyance system having conveyance rollers 6-1 and 6-2, guide roller 5, impregnation roller 7, an export apparatus (not illustrated) that draws unidirectional fiber-reinforced thermoplastic resin sheet 1 from the apparatus, and the like, by a driving system (not illustrated). Reinforcement fiber bundle 2 may be imported into the apparatus or exported out of the apparatus by using a feeding apparatus of the reinforcement fiber bundle, the apparatus having a fiber bundle delivery roller or the like around which reinforcement fiber bundle 2 is wound, or by using a wind-up roller that winds up unidirectional fiber-reinforced thermoplastic resin sheet 1.

Resin 3 pressurized, fed into a coating apparatus by material feeding apparatus 4, is pushed out onto the periphery of impregnation roller 7 and a coating layer of resin 3 is formed. The coating layer on impregnation roller 7 is moved to a nip section with guide roller 5, along with rotation of impregnation roller 7. On the other hand, reinforcement fiber bundle 2 is conveyed in an arrow direction, and reinforcement fiber bundle 2 is contacted with and impregnated with resin 3 in a region from a nip section between guide roller 5 and impregnation roller 7, to a portion indicated by A. The temperature of resin 3 is here controlled so that reinforcement fiber bundle 2 can be impregnated. Thereafter, unidirectional fiber-reinforced thermoplastic resin sheet 1 having resin layer 1-1 and fiber-reinforced layer 1-2 is obtained by cooling.

The resin layer having a fiber volume fraction of the reinforcement fiber, of 0% or more and less than 5%, illustrated in FIG. 2 may be formed by appropriately adjusting, for example, conditions in contacting and impregnating with the resin. More specifically, for example, conditions such as the tension applied to reinforcement fiber bundle 2, and the density and the thickness of reinforcement fiber bundle 2 can be adjusted to thereby control the state of impregnation of reinforcement fiber bundle 2 with resin 3, and the thickness of resin layer 1-1 formed by resin 3 passing through reinforcement fiber bundle 2 and leaking out on an opposite side to impregnation roller 7, and as a result, unidirectional fiber-reinforced thermoplastic resin sheet 1 having the structure illustrated in FIG. 1A can be obtained.

The tension applied to reinforcement fiber bundle 2 is preferably 800 cN to 2,000 cN, more preferably 1,000 cN to 1,500 cN. When the tension applied to reinforcement fiber bundle 2 falls within the above range, fiber-reinforced layer 1-2 and resin layer 1-1 tend to be integrally formed. The tension applied to reinforcement fiber bundle 2 is determined by measuring the tension of reinforcement fiber bundle 2 immediately before contact with impregnation roller 7, with a tension meter. The tension meter is not particularly limited as long as it is an apparatus that can measure the tension of a carbon fiber bundle, and examples include a digital tension meter (V-groove type) manufactured by Nidec-Shimpo Corporation.

The type of resin 3 is not particularly limited, and is preferably a propylene-based resin having a melt flow rate (MFR) of 10 to 1,000 g/10 minutes, as measured at 230°C and a load of 2.16 kg according to ASTM D1238, more preferably a propylene-based resin having a MFR of 15 to 500 g/10 minutes, from the viewpoint that resin layer 1-1 is appropriately formed to result in a more enhancement in impact characteristics.

The temperature of the impregnation roller is not particularly limited as long as it is equal to or more than the melting point of resin 3. The temperature is preferably 200°C to 350°C, more preferably 220°C to 300°C from the viewpoint that resin layer 1-1 is appropriately formed to result in a more enhancement in impact characteristics.

While one example of the production method with impregnation is described above, the production method with stacking can also provide the unidirectional fiber-reinforced thermoplastic resin sheet of the present invention, as described above. The production method with stacking is a method involving stacking a resin layer on at least one surface of a unidirectional fiber-reinforced thermoplastic resin sheet for constituting a fiber-reinforced layer. Specific examples of the stacking method include various coating methods such as a bar coater method, a blade coater method, a roller coater method, a die coater method and a lip coater method, and a method involving laminating a resin layer (resin film) separately formed. Such a stacking method can be utilized to thereby obtain unidirectional fiber-reinforced thermoplastic resin sheet 1 having the structure illustrated in each of FIGS. 1A and 1B.

### <Applications>

Applications of the unidirectional fiber-reinforced thermoplastic resin sheet are not limited, and the resin sheet is useful as a strengthener for other structure materials. The resin sheet is particularly useful as a strengthener of a member constituting a vehicle or an airplane in which instantaneous impact is to be generated.

Specific examples of applications of the unidirectional fiber-reinforced thermoplastic resin sheet include primary structure materials including, for example, main wings, vertical and horizontal tails, secondary structure materials including, for example, ailerons, rudders and elevators, interior materials including, for example, seats and tables, component members for common air vehicles such as airplanes and helicopters, including for example, power plants, hydraulic cylinders and composite brakes, rocket component members including, for example, nozzle cones and motor cases, satellite component members including, for example, antennas, structures, solar panels, battery cases and telescopes, mechanical component members including, for example, frames, shafts, rollers, leaf springs, machine tool heads, robot arms, transport hands and synthetic fiber pots, component members for high-speed rotating bodies, including, for example, centrifuge rotors and uranium concentration cylinders, electronic and electric component members including, for example, parabola antennas, battery members, radars, acoustic speaker cones, computer components, printer components, personal computer housings and tablet housings, component members for automobiles and bikes, including, for example, frame components, semi-structural components, outer plate components, interior and exterior components, power plants, other equipment-hydraulic cylinders, brakes, battery cases, drive shafts, engine parts, spoilers, racing car bodies, crash cones, chairs, tablets, telephone covers, under covers, side covers, transmission covers, battery trays, rear steps, spare tire containers, bus body walls and truck body walls, vehicle component members including, for example, interior materials, floor panels, ceiling panels, linear motor car bodies, bullet train/railway car bodies, window wipers, dollies and seats, marine component members/fuselages including, for example, boats and ship hulls including, for example, yachts, cruisers and boats, and masts, ladders, propellers, hard sails, screws, military fuselages, submarine fuselages and deep sea exploration ships, component members for pressure vessels, including, for example, actuators, cylinders, bombs, hydrogen tanks, CNG tanks and oxygen tanks, scientific apparatus components/members including, for example, stirring blades, pipes, tanks, pit floors and plant piping, wind power generation component members including, for example, blades, skins, skeleton structures and de-icing systems, component members and goods for medical/nursing care equipment, including, for example, X-ray diagnostic apparatus components, wheelchairs, artificial bones, artificial legs/arms, axillary crutches, nursing care aids/robots (power assist suits), walking machines and nursing beds, civil engineering and infrastructure component members including, for example, CF composite cables, concrete strengthening members, guard rails, bridges, tunnel walls, hoods, cables, tension rods, strand rods and flexible pipes, component members for submarine oil field mining, including, for example, marine risers, flexible jumpers, flexible risers and drilling risers, sports and leisure goods including, for example, fishing rods, reels, golf clubs, tennis rackets, badminton rackets, ski plates, stocks, snowboards, ice hockey sticks, snowmobiles, bows, kendo bamboo swords, baseball bats, swim plungers, and sporting goods and sporting helmets for disabled peoples, bicycle components including, for example, frames, disc wheels, rims, handles and saddles, supplies including, for example, eyeglasses, bags, umbrellas and ballpoint pens, and other industrial component members and goods including, for example, plastic pallets, containers, logistics materials, resin molds, furniture, umbrellas, helmets, pipes, scaffolding boards, safety boots, protectors, fuel cell covers, drone blades, frame, jigs and jig frames.

### <Stacked panel>

The stacked panel of the present invention is a stacked panel including a plurality of the above-mentioned unidirectional fiber-reinforced thermoplastic resin sheets of the present invention. The stacked panel is useful as a constituent member for various products.

The number of the unidirectional fiber-reinforced thermoplastic resin sheets stacked in the stacked panel is not particularly limited. The number of the sheets stacked may be appropriately determined depending on objective thickness, physical properties and the like of the stacked panel. The thickness of the entire stacked panel is not particularly limited, and is preferably 0.3 mm or more and 10 mm or less, more preferably 0.5 mm or more and 5 mm or less.

The method for producing the stacked panel is not particularly limited. The stacked panel is obtained by, for example, joining a plurality of the unidirectional fiber-reinforced thermoplastic resin sheets according to a known method such as a hot pressing method.

### <Structure material>

The structure material of the present invention is a structure material including the above-mentioned unidirectional fiber-reinforced thermoplastic resin sheet of the present invention. The structure material preferably includes the above-mentioned unidirectional fiber-reinforced thermoplastic resin sheet of the present invention, as a strengthener. The structure material can be included in a vehicle, an airplane, or the like and then used.

Specific examples of the structure material of the present invention include materials constituting vehicles, such as doors, bumpers, seats and car bodies, and materials constituting airplanes, such as doors, seats, tables for seats, and airplane bodies. The structure material may also be a constituent member for such structure materials.

### Examples

Hereinafter, the unidirectional fiber-reinforced thermoplastic resin sheet of the present invention will be further described with reference to Examples and Comparative Example. The present invention is not limited by the following Examples.

The Izod impact strength and the fiber volume fraction were measured according to the following methods.

### (1) Izod (IZOD) impact strength

Eighteen of the unidirectional fiber-reinforced thermoplastic resin sheets were stacked so that each of the fiber-reinforced layers and each of the fiber-reinforced layers were contacted and each of the resin layers and each of the resin layers were contacted, and hot pressed, to obtain a stacked product for testing. Such stacking was made so that the surface of the stacked product for testing corresponded to the fiber-reinforced layer. The thickness of the stacked product was 3.1 mm. A mold notched Izod impact test was performed according to ASTM D256 (1993), to measure the Izod impact strength (J/m).

### (2) Volume fraction (Vf) of fiber

The fiber volume fraction of the entire unidirectional fiber-reinforced thermoplastic resin sheet was measured by a combustion method prescribed in JIS K7075 (1991). The fiber volume fraction of the fiber-reinforced layer and the fiber volume fraction of the resin layer in the unidirectional fiber-reinforced thermoplastic resin sheet were calculated according to a method for calculating the respective volumes of a fiber section and a matrix section in a cross section of the unidirectional fiber-reinforced thermoplastic resin sheet, photographed by X-ray CT, with image analysis. Such photographing by X-ray CT was made under the following conditions: the apparatus used was nano3DX manufactured by Rigaku Corporation, the target used was Cu, the lens used was 0540, the binning was 1, the number of scanning angles was 1000 points, the cumulative time at each of the angles was 12 seconds, the pixel resolution was 0.650 um/pixel, and the data measured was obtained with 16 bits. The fiber volume fractions were derived by image analysis with VGSTUDIO MAX manufactured by Volume Graphics Ltd., and were derived by separating the respective regions of the fiber section and the matrix section at a threshold of 29,900.

### (Example 1)

### <Washing of carbon fiber bundle>

A carbon fiber bundle (trade name Pyrofil TR50S12L manufactured by Mitsubishi Chemical Corporation, number of filaments 24,000, strand strength 5,000 MPa, strand elastic modulus 242 GPa) was immersed in acetone and subjected to ultrasound for 10 minutes, thereafter pulled up and further washed with acetone three times, and dried at room temperature for 8 hours, to thereby obtain such a carbon fiber bundle from which a sizing agent attached was removed.

### <Production of emulsion>

Mixed were 100 parts by mass of a propylene-butene copolymer having a shore D hardness of 52 and having a weight average molecular weight of 350000 as measured by GPC, as propylene-based resin (A), 10 parts by mass of a maleic anhydride-modified propylene-based resin (weight average molecular weight Mw 20,000, acid value 45 mg-KOH/g, maleic anhydride content 4mass%, melting point 140°C) as propylene-based resin (B), and 3 parts by mass of potassium oleate as a surfactant. The mixture was fed at a rate of 3000 g/hour through a hopper of a double-screw extruder (PCM-30 manufactured by Ikegai Iron Works Ltd., L/D = 40), an aqueous 20% potassium hydroxide solution was continuously fed at a rate of 90 g/hour through a feeding port provided at a vent section of the extruder, and the resultant was continuously extruded at a heating temperature of 210°C. The resin mixture extruded was cooled to 110°C in a jacketed static mixer placed at a port of the extruder, and loaded into warm water at 80°C, to obtain an emulsion for carbon fiber pre-treatment. The concentration of the solid content in the emulsion obtained was 45% (on a mass basis).

The maleic anhydride-modified propylene-based resin was a modified resin obtained by mixing 96 parts by mass of a propylene-butene copolymer, 4 parts by mass of maleic anhydride, and 0.4 parts by mass of a polymerization initiator (trade name PERHEXA 25B manufactured by NOF Corporation), and modifying the mixture at a heating temperature of 160°C for 2 hours.

### <Production of carbon fiber bundle>

The emulsion for carbon fiber pre-treatment, prepared by the above method, was attached to a carbon fiber for forming the carbon fiber bundle washed by the above method, by use of a roller impregnation method. Next, the carbon fiber was dried online at 130°C for 2 minutes and a low boiling point component was removed, and the carbon fiber bundle was obtained. The amount of the emulsion attached was 0.87mass%.

### <Production of unidirectional fiber-reinforced thermoplastic resin sheet>

The carbon fiber bundle obtained as above was aligned, and a unidirectional fiber-reinforced thermoplastic resin sheet was produced by using a production apparatus illustrated in FIG. 2.

Specifically, polypropylene (trade name J108M manufactured by Prime Polymer Co., Ltd., MFR (ASTM D 1238, 230°C and a load of 2.16 kg) = 45 g/10 minutes) and a maleic anhydride-modified polypropylene-based resin (trade name Admer QE800 manufactured by Mitsui Chemicals, Inc., MFR (ASTM D 1238, 230°C and a load of 2.16 kg) = 9.1 g/10 minutes) were blended at a mass ratio of 90/10, and molten and mixed in an extruder having a T-die. The resin was extruded and fed from the T-die onto the periphery of an impregnation roller rotated. The temperatures of the extruder and the T-die were adjusted to 260°C, and the temperature of the impregnation roller was also adjusted to 260°C. The amount of the resin fed was adjusted so that the mass ratio between the carbon fiber bundle and the resin was 67/33. The tensile force (CF tension) of the carbon fiber was adjusted to 1,200 cN.

It was confirmed in the above process that the resin layer was formed on the upper surface of the carbon fiber bundle, namely, a surface of the carbon fiber bundle, the surface being opposite to the impregnation roller. A unidirectional fiber-reinforced thermoplastic resin sheet was cooled at a position far from the roller, and a unidirectional fiber-reinforced thermoplastic resin sheet was obtained which included a resin layer having a thickness of 40 µm and a fiber-reinforced layer having a thickness of 128 µm.

The unidirectional fiber-reinforced thermoplastic resin sheet was produced by impregnation, and thus the thermoplastic resin in the resin layer and the thermoplastic resin (matrix resin) in the fiber-reinforced layer were the same as each other, and both the layers were integrally formed. The content of the thermoplastic resin in the fiber-reinforced layer was 21mass%, the content of the thermoplastic resin in the resin layer was 100mass%, the content of the thermoplastic resin in the entire unidirectional fiber-reinforced thermoplastic resin sheet was 33mass%, and the Izod impact strength of the unidirectional fiber-reinforced thermoplastic resin sheet was 1916 J/m.

### (Example 2)

A unidirectional fiber-reinforced thermoplastic resin sheet having a thickness of 142 µm, including a resin layer having a thickness of 34 µm, was obtained in the same manner as in Example 1 except that polypropylene (manufactured by Sabic Corporation, trade name 515A, MFR (ASTM D 1238, 230°C and a load of 2.16 kg) = 240 g/10 minutes) was used instead of polypropylene (trade name J108M manufactured by Prime Polymer Co., Ltd.).

The unidirectional fiber-reinforced thermoplastic resin sheet was produced by impregnation, and thus the thermoplastic resin in the resin layer and the thermoplastic resin (matrix resin) in the fiber-reinforced layer were the same as each other, and both the layers were integrally formed. The content of the thermoplastic resin in the fiber-reinforced layer was 23mass%, the content of the thermoplastic resin in the resin layer was 98mass%, the content of the thermoplastic resin in the entire unidirectional fiber-reinforced thermoplastic resin sheet was 33mass%, and the Izod impact strength of the unidirectional fiber-reinforced thermoplastic resin sheet was 1841 J/m.

### (Comparative Example 1)

A unidirectional fiber-reinforced thermoplastic resin sheet was obtained in the same manner as in Example 2 except that the tensile force (CF tension) of the carbon fiber was changed to 600 cN. No resin layer was formed in the unidirectional fiber-reinforced thermoplastic resin sheet. The Izod impact strength of the unidirectional fiber-reinforced thermoplastic resin sheet was 1654 J/m.

Table 1 shows production conditions and physical properties of the unidirectional fiber-reinforced thermoplastic resin sheets obtained in Examples 1 and 2, and Comparative Example 1.

### [Table 1]

**Table 1**

| | | Example 1 | | Example 2 | | Comparative Example 1 | |
|---|---|---|---|---|---|---|---|
| Resin | | J108MG | 90 | 515A | 90 | 515A | 90 |
| | | QE800 | 10 | QE800 | 10 | QE800 | 10 |
| Temperature (°C) of T-die | | 260 | | 260 | | 260 | |
| Temperature (°C) of impregnation roller | | 260 | | 260 | | 260 | |
| CF tension (cN) | | 1200 | | 1200 | | 600 | |
| Entire sheet, thickness | (µm) | 168 | | 176 | | 168 | |
| | Vf (%) | 50 | | 50 | | 50 | |
| Resin layer, thickness | (µm) | 40 | | 34 | | - | |
| | Vf (%) | 0 | | 1 | | | |
| Fiber-reinforced layer, thickness | (µm) | 128 | | 142 | | | |
| | Vf (%) | 65 | | 62 | | | |
| IZOD impact strength | (J/m) | 1916 | | 1841 | | 1654 | |

### Industrial Applicability

The unidirectional fiber-reinforced thermoplastic resin sheet of the present invention has an enhanced impact resistance, is easily bonded by hot pressing or the like, and is useful for treatment, strengthening, and the like of surfaces of various members. Furthermore, a stacked panel in which the unidirectional fiber-reinforced thermoplastic resin sheets of the present invention are stacked is useful as a panel material that is demanded to have impact resistance.

### Reference Signs List

1 unidirectional fiber-reinforced thermoplastic resin sheet
1-1 resin layer
1-2 fiber-reinforced layer
2 reinforcement fiber bundle
3 resin
4 material feeding apparatus
5 guide roller
6-1, 6-2 conveyance roller
7 impregnation roller
10 fiber-reinforced layer
11 reinforcement fiber
12 thermoplastic resin
20, 20a, 20b resin layer
22 thermoplastic resin

## Claims

1. A unidirectional fiber-reinforced thermoplastic resin sheet including a thermoplastic resin and a reinforcement fiber, the reinforcement fiber being aligned in a longitudinal direction, the unidirectional fiber-reinforced thermoplastic resin sheet comprising:
a fiber-reinforced layer having a fiber volume fraction of the reinforcement fiber, of 40% or more; and
a resin layer having a fiber volume fraction of the reinforcement fiber, of 0% or more and less than 5%.

2. The unidirectional fiber-reinforced thermoplastic resin sheet according to claim 1, wherein the resin layer forms at least one surface of opposite two surfaces in a thickness direction of the unidirectional fiber-reinforced thermoplastic resin sheet.

3. The unidirectional fiber-reinforced thermoplastic resin sheet according to claim 1, wherein a ratio (t2/t1) of a thickness (t2) of the resin layer to a thickness (t1) of the fiber-reinforced layer is 0.05 or more and 0.5 or less.

4. The unidirectional fiber-reinforced thermoplastic resin sheet according to claim 1, wherein the resin layer has a thickness of 10 µm or more.

5. The unidirectional fiber-reinforced thermoplastic resin sheet according to claim 1, wherein the fiber-reinforced layer has a thickness of 60 µm or more and 300 µm or less.

6. The unidirectional fiber-reinforced thermoplastic resin sheet according to claim 1, wherein the reinforcement fiber comprises a carbon fiber.

7. The unidirectional fiber-reinforced thermoplastic resin sheet according to claim 1, wherein the thermoplastic resin in the fiber-reinforced layer comprises a polyolefin-based resin.

8. The unidirectional fiber-reinforced thermoplastic resin sheet according to claim 1, wherein the thermoplastic resin in the resin layer comprises a polyolefin-based resin.

9. The unidirectional fiber-reinforced thermoplastic resin sheet according to claim 1, wherein a fiber volume fraction of the entire unidirectional fiber-reinforced thermoplastic resin sheet is 40% or more and 60% or less.

10. The unidirectional fiber-reinforced thermoplastic resin sheet according to claim 1, wherein the thermoplastic resin in the fiber-reinforced layer and the thermoplastic resin in the resin layer are compatible with each other.

11. The unidirectional fiber-reinforced thermoplastic resin sheet according to claim 1, wherein the thermoplastic resin in the fiber-reinforced layer and the thermoplastic resin in the resin layer are the same as each other.

12. The unidirectional fiber-reinforced thermoplastic resin sheet according to claim 1, wherein the fiber-reinforced layer and the resin layer are integrally formed.

13. A stacked panel comprising a plurality of the unidirectional fiber-reinforced thermoplastic resin sheets according to claim 1.

14. A structure material comprising the unidirectional fiber-reinforced thermoplastic resin sheet according to claim 1.

15. A method for producing the unidirectional fiber-reinforced thermoplastic resin sheet according to claim 1, the method comprising impregnating a reinforcement fiber with a thermoplastic resin on an impregnation roller including a molten thermoplastic resin, wherein
impregnation with the thermoplastic resin is performed at a tensile force of the reinforcement fiber in a range from 800 cN to 2,000 cN.

16. The method for producing the unidirectional fiber-cured thermoplastic resin sheet according to claim 15, wherein the thermoplastic resin comprises a propylene-based resin having a melt flow rate (MFR) of 10 to 1,000 g/10 minutes, as measured at 230°C and a load of 2.16 kg according to ASTM D1238.
